# EUROPEAN PATENT APPLICATION

(11) **EP 1 550 910 A1**
(43) Date of publication of application: **06.07.2005**
(21) Application number: 03807966.1
(22) Date of filing: 08.09.2003
(51) Int. Cl.: G03B 21/60

(54) **SCREEN**

(30) Priority: 11.10.2002 JP 2002298155
(71) Applicant: Yupo Corporation, Tokyo 101-0062 (JP)
(72) Inventor: Takahashi, Tomotsugu, Tokyo 101-0062 (JP); Ueda, Takahiko, Kashima-gun, Ibaraki 314-0102 (JP)
(74) Representative: Zimmermann, Gerd Heinrich
(86) International application number: PCT/JP2003/011433
(87) International publication number: WO 2004/034144

(57) **Abstract**

An object of the present invention is to provide an easily handleable screen which functions by using the reflected light. The present invention provides a screen comprising a polyolefin-based resin-containing film layer (A) having a total light beam transmittance of less than 30%, a total light beam reflectance of more than 70% to 100%, a glossiness of 60% or less and a density of 0.5 to 1.2 g/cm³.

## Description

### <TECHNICAL FIELD>

The present invention relates to a screen, more specifically, a screen which functions by using the reflected light.

### <BACKGROUND ART>

For the purpose of presentation or advertisement, a technique of projecting an image on a screen by a projecting device, such as a slide projector, an overhead projector, and a liquid crystal projector, is commonly employed (see, for example, JP-A-05-072630 (the term "JP-A" as used herein means an "unexamined published Japanese patent application") and JP-A-07-270917). With recent reduction in the cost, these projecting devices are also being used for viewing and listening to projected images at home, and the market thereof is expanding.

As for the reflection-type screen used for viewing the projected image from the same direction as the projector, for example, a screen comprising a vinyl chloride (true specific gravity: about 1.4) cloth lined with cotton or glass fiber and a white reflection layer provided thereon is known, and various designs have been made thereon. For example, the reflectance is increased to obtain high brightness, a polarizing sheet layer is stacked to prevent objectionable reflection of natural light, or a light-scattering sheet is stacked to enlarge the viewing angle. However, these screens are usually excessively heavy, and when using a polarizing sheet, the screen must be set to match the polarizing direction of the projected light, the setting position or housing method is limited and therefore, a fixed system is employed in many cases.

On the other hand, in order to form a large screen, a technique of combining and disposing a plurality of screens has been proposed, each screen being a portable screen produced by stacking a foamed film having an adsorption activity on the back surface of an aluminum-deposited PET film having stacked thereon a polarizing film and a light-diffusing film (see, for example, JP-A-09-274255). However, due to its highly complicated structure, the total weight of screens increases similarly to the above-described screen, the production unit cost tends to rise and when usage at home is envisioned, this is not necessarily a simple and easily handleable screen.

A screen using a foamed polyester film is also being used, but due to its strong resilience and tenacity, if the thickness is large, high repulsion is generated during rolling of the screen and therefore, the screen is limited to a thin screen and suffers from poor texture.

### <DISCLOSURE OF THE INVENTION>

An object of the present invention is to provide a screen which gives a clear image when the image is projected onto the screen by a projecting device, such as a slide projector, an overhead projector, and a liquid crystal projector, ensures simple setting or removal of the screen, and is easily handleable.

The present inventors have found that a processed film having specific optical properties and physical properties can be a handleable screen having a function of ensuring clear viewing of a projected image by the effect of the reflected light.

That is, the present invention provides a screen comprising a film layer (A) containing a polyolefin-based resin (true specific gravity: 0.9 to 1.0) and having a total light beam transmittance of less than 30%, a total light beam reflectance of more than 70% to 100%, a glossiness of 60% or less and a density of 0.5 to 1.2 g/cm³.

### <BEST MODE FOR CARRYING OUT THE INVENTION>

The screen of the present invention is described in detail below. The mark "~" as used in the present invention means that the numerical values before and after the mark are a lower limit and an upper limit, respectively.

The screen of the present invention can take various embodiments depending on the place, purpose, or method of use. In the present invention, the screen is described in detail by using the following modes, but appropriate changes and modifications can be made therein as long as these are not departing from the purport of the present invention.

### Tapestry:

A material having a drop curtain-like shape and usable for the image projection by hanging it in midair or on a wall surface. Show Window:

A material having a shape that an adhesive layer or a removable layer is provided on at least one surface, and usable for the image projection by attaching it directly to a wall surface, a glass surface or the like.

### Roll Screen:

A material which is used for the image projection by hanging it similarly to the tapestry, but is processed into a shape capable of housing the screen in the rolled state and can be housed by rolling it up on an upper take-up tube or the like when not in use.

The polyolefin-based resin-containing film layer (A)

constituting the screen of the present invention has a total light beam transmittance of less than 30%, preferably less than 25%, more preferably less than 20%, and a total light beam reflectance of more than 70% to 100%, preferably from 75 to 100%, more preferably from 80 to 100%.

If the total light beam transmittance is 30% or more or the total light beam reflectance is 70% or less, the projected image light is thoroughly transmitted to the back surface side of the screen and the brightness of projected image on the projection plane disadvantageously tends to decrease.

The total light beam transmittance and total light beam reflectance as used in the present invention mean respective average values of transmittance and reflectance measured at a wavelength in the range from 400 to 700 nm according to the method described in JIS-Z8722.

The film layer (A) for use in the present invention preferably diffuses and reflects light beams incident on the projection plate and for this purpose, the glossiness is 60% or less, preferably 50% or less.

If the glossiness exceeds 60%, halation occurs on the screen surface as that on a mirror face, and viewing of the projected image disadvantageously tends to become difficult.

The glossiness as used in the present invention is measured by the method described in JIS-P8142.

The density of the film layer (A) for use in the present invention is from 0.5 to 1.2 g/cm³, preferably from 0.5 to 1.1 g/cm³, more preferably from 0.6 to 1.0 g/cm³.

If the density is less than 0.5 g/cm³, the mechanical strength of the film layer (A) decreases and at the same time, folds or sags disadvantageously tend to be readily generated during processing, whereas if it exceeds 1.2 g/cm³, the basis weight and in turn the entire weight are liable to be excessively large and this is not preferred in view of handling.

The density as used in the present invention is measured by the method described in JIS-P8124.

The opacity of the film layer (A) for use in the present invention is preferably from more than 75% to 100%, more preferably from 80 to 100%, still more preferably from 85 to 100%.

If the opacity is 75% or less, the projected image light is thoroughly transmitted to the back surface side of the screen and the brightness of projected image on the projection plane disadvantageously tends to decrease, giving rise to difficulty in viewing the projected image.

The opacity as used in the present invention is a numerical value obtained by subtracting the value measured according to the method described in JIS-P8138 in the state of abutting a black plate to the back surface of a sample from the value measured in the state of abutting a white plate to the back surface of the same sample, and expressed in a percentage form.

The thickness of the film layer (A) for use in the present invention is preferably from 20 to 500 µm, more preferably from 30 to 350 µm.

If the thickness is less than 20 µm, the mechanical strength of the screen itself decreases and a large screen is difficult to form, whereas if it exceeds 500 µm, the weight of the screen itself becomes excessively large and the handling of the screen tends to be difficult.

For the same reasons as above, the thickness of the entire screen of the present invention is preferably from 20 to 2, 000 µm, more preferably from 30 to 1, 000 µm, still more preferably from 50 to 800 µm.

The thickness as used in the present invention is measured by the method described in JIS-P8118.

In order to impart the above-described optical properties to the film layer (A) for use in the present invention, voids may be formed in the film layer. In this case, the porosity is preferably from 20 to 75%, more preferably from more than 25% to 75%, still more preferably from 28 to 70%.

If the porosity is less than 20%, the total light beam reflectance or opacity of the screen decreases to allow for thorough transmission of the projected image light to the back surface side of the screen and lower the brightness of the projected image on the projection plate, and the projected image tends to be difficultly viewed, whereas if the porosity exceeds 75%, troubles such as rupturing or holing are readily generated during shaping and this makes it difficult to shape the film layer in a stable manner.

The porosity as used in the present invention is a numerical value obtained by cutting the film layer, observing its cross section through an electron microscope and determining the area ratio of voids occupying that region, expressed in a percentage form.

The film layer (A) for use in the present invention can be produced by blending an inorganic fine powder and/or an organic filler to a polyolefin-based resin, and forming the blend into a film.

Examples of the polyolefin-based resin include a polyethylene-based resin such as low-density polyethylene, linear low-density polyethylene, medium-density polyethylene and high-density polyethylene, a polypropylene-based resin, a polymethyl-1-pentene and an ethylene-cyclic olefin copolymer.

Among these polyolefin-based resins, a polypropylene-based resin is preferred.

As for the polypropylene-based resin, a propylene homopolymer or a copolymer of propylene with an α-olefin such as ethylene, 1-butene, 1-hexene, 1-heptene and 4-methyl-1-pentene can be used. The stereoregularity is not particularly limited, and those exhibiting various degrees of isotacticity, syndiotacticity or stereoregularity can be used.

The copolymer may be a binary system, a ternary system or a quaternary system and may be a random copolymer or a block copolymer.

In the film layer (A) constituting the screen of the present invention, for example, a polyamide resin such as nylon 6, nylon 6,6 and nylon 6,10; a polyester-based resin such as polyethylene terephthalate or a copolymer thereof, polyethylene naphthalate, aliphatic polyester; a polycarbonate, an atactic polystyrene, a syndiotactic polystyrene or a polyphenylene sulfide may be blended as an additional component.

These resins may be used as a mixture of two or more thereof.

The content of the polyolefin-based resin in the film layer (A) is preferably from 30 to 99 wt%, more preferably from 35 to 97 wt%. If the content is less than 30 wt%, troubles such as rupturing or holing are readily generated during shaping and this makes it difficult to shape the film in a stable manner, whereas if it exceeds 99 wt%, the total light beam transmittance, total light beam reflectance and opacity tend to be not balanced.

Examples of the inorganic fine powder which can be used include calcium carbonate, calcined clay, silica, diatomaceous earth, talc, mica, synthetic mica, sericite, kaolinite, titanium oxide, barium sulfate and alumina. Among these, calcium carbonate and barium sulfate are preferred.

As for the organic filler, a resin different from the thermoplastic resin as the main component of the film layer is preferably selected.

Examples thereof include polyethylene terephthalate, polybutylene terephthalate, polystyrene, polycarbonate, nylon 6, nylon 6,6, a cyclic olefin homopolymer and a copolymer of cyclic olefin with ethylene or the like (COC), each having a melting point of 120 to 300°C or a glass transition temperature of 120 to 280°C.

In the film layer (A) of the present invention, one member may be selected from the above-described inorganic fine powders or organic fillers and used, or two or more members may be used in combination. In the case of using two or more members in combination, a mixture of an organic fine powder and an organic filler may also be used.

The content of the inorganic fine powder and/or organic filler in the film layer (A) is preferably from 1 to 70 wt%, more preferably from 3 to 65 wt%. If the content is less than 1 wt%, the total light beam transmittance, total light beam reflectance and opacity tend to be not balanced, whereas if it exceeds 70 wt%, troubles such as rupturing or holing are readily generated during shaping and this makes it difficult to shape the film layer in a stable manner.

In the film layer (A) for use in the present invention, an antioxidant, a photostabilizer, a dispersant, a lubricant and the like may be further blended, if desired. As the antioxidant, for example, a sterically-hindered phenol-based antioxidant, a phosphorus-based antioxidant or an amine-based antioxidant may be blended in an amount of 0.001 to 1 wt%; as the photostabilizer, for example, a sterically-hindered amine-based photostabilizer, a benzotriazole-based photostabilizer or a benzophenone-based photostabilizer may be blended in an amount of 0.001 to 1 wt%; and as the dispersant for the inorganic fine powder, for example, a silane coupling agent, a higher fatty acid such as oleic acid and stearic acid, a metal soap, a polyacrylic acid, a polymethacrylic acid or a salt thereof may be blended in an amount of 0.01 to 4 wt%.

A blend containing the polyolefin-based resin, the inorganic fine powder and/or the organic filler can be shaped by a general method. Examples thereof include a cast shaping method of extruding the melted resin into a film by using a single-layer or multilayer T-die or I-die connected to an extruder, a uniaxially stretched film-shaping method of longitudinally stretching the cast film obtained above by utilizing the difference in peripheral velocity of a roll group, a biaxially stretched film-shaping method of further transversely stretching the uniaxially stretched film obtained above by utilizing a tenter oven, and a simultaneous biaxially stretched film-shaping method using a combination of tenter oven and linear motor.

In the case of stretching the film, the stretching temperature is a temperature from 2 to 60°C lower than the melting point of the polyolefin-based resin used and is preferably from 152 to 164°C when the resin is a propylene homopolymer (melting point: 155 to 167°C), and from 110 to 120° C when the resin is a high-density polyethylene (melting point: 121 to 134°C). The stretching rate is preferably from 20 to 350 m/min.

The film layer (A) for use in the present invention may have a single-layer structure or a multilayer structure. In the case of a multilayer structure, the structure may be a two-layer structure or a structure comprising three or more layers.

In the case of a single-layer structure, the film layer (A) may be unstretched, uniaxially stretched or biaxially stretched. In the case of a two-layer structure, the structure may be any one of unstretched/unstretched, unstretched/uniaxially stretched, unstretched/biaxially stretched, uniaxially stretched/uniaxially stretched, uniaxially stretched/biaxially stretched, and biaxially stretched/biaxially stretched. In the case of a structure comprising three or more layers, this may be obtained by combining the above-described single-layer structures and two-layer structures, and any combination may be used.

The layers may be stacked by a known method such as coextrusion and lamination.

On at least one surface of the film layer (A) for use in the present invention, a coat layer having suitability for printing by an off-set printing machine, a gravure printing machine, a flexographic printing machine, a screen printing machine, a letter press printing machine, a laser printer, a thermal transfer printer, an inkjet printer or the like may be provided, if desired, within the range of not impairing the projected image.

In the screen of the present invention, for the purpose of supplementing the mechanical strength so as to cope with the formation of large screen or the like, a thermoplastic resin-containing film layer (B), a woven fabric and a non-woven fabric may be provided individually or in combination on at least one surface of the film layer (A), if desired.

The thermoplastic resin-containing film layer (B) for use in the present invention can be produced by forming a thermoplastic resin into a film.

Examples of the thermoplastic resin include a polyolefin-based resin such as polyethylene-based rein (e.g., low-density polyethylene, linear low-density polyethylene, medium-density polyethylene, high-density polyethylene), polypropylene-based resin, polymethyl-1-pentene and ethylene-cyclic olefin copolymer; a polyamide resin such as nylon 6, nylon 6, 6 and nylon 6, 10; a polyester-based resin such as polyethylene terephthalate or a copolymer thereof, polyethylene naphthalate and aliphatic polyester; a polycarbonate, an atactic polystyrene, a syndiotactic polystyrene and a polyphenylene sulfide. These resins may be used as a mixture of two or more thereof.

Among these, the above-described polyolefin-based resin and polyester-based resin used for the shaping of the film layer (A) are preferably used for the thermoplastic resin-containing film layer (B). Furthermore, the same inorganic fine powder, organic filler, additives and shaping method as those described above for the film layer (A) can be used. The structure may be a single-layer structure or a multilayer structure, a stretched layer may be contained in the structure, or all layers may be unstretched.

The thickness of the film layer (B) of the present invention is preferably from 10 to 1,000 µm, more preferably from 20 to 800 µm, still more preferably from 30 to 500 µm.

If the thickness is less than 10 µm, the mechanical strength is insufficient and this contradicts the purport of the present invention, whereas if it exceeds 1,000 µm, the entire screen becomes excessively heavy and becomes difficult to handle.

Examples of the woven fabric for use in the present invention include a plain woven fabric having a basis weight of 40 to 200 g/m², which is woven by a plain weaving method where warp and weft yarns each of 40 to 150 denier, preferably from 50 to 100 denier, are crossed every other yarn each at a ratio of 50 to 140 yarns, preferably from 60 to 100 yarns, per 2.54 cm. This woven fabric can be stacked and bonded through an adhesive applied as an adhesion layer.

Examples of the material which can be used for the warp and weft of the plain woven fabric include nylon 6, nylon 6,6, polyethylene terephthalate, cotton, rayon, polyacrylonitrile, polyethylene fluoride, polypropylene and polyvinylidene fluoride.

As for the non-woven fabric for use in the present invention, a fiber-reinforced sheet obtained by intertwining staple fibers to produce a non-woven fabric-like material and pressing it under heat can be used, and this sheet can be produced as follows. Staple fibers (fiber size: 0.2 to 15 denier, fiber length: 1 to 20 mm) are dispersed in water, sheeted into a paper material by using a paper machine, and pressed under heat by a roll or a press.

At the time of sheeting, pulp-like particles may be blended in the water dispersion at a ratio of 10 to 90 wt%. Examples of the raw material for the pulp-like particle include an aromatic polyamide and an aromatic polyester. Also, a polyvinyl alcohol fibrous binder or a thermoplastic resin powder such as polyethylene, polyester, polyamide and polypropylene may be blended as a binding agent for staple fibers in a proportion of 5 to 30 wt%. In addition, a pigment, a plasticizer, a viscosity adjusting agent, a dispersant and the like may also be blended.

The basis weight of the non-woven fabric sheet is preferably from 12 to 80 g/m² in view of enhancement of strength and balance between handling and cost.

The non-woven fabric sheet may also be produced by spreading a thermoplastic resin powder and/or stacking a thermoplastic resin sheet on the non-woven fabric-like material obtained above and then integrating these under heat and pressure. Examples of the thermoplastic resin as a raw material for the powder or sheet include polyethylene, polypropylene, polyvinyl chloride, polyvinylidene chloride, polystyrene, a styrene-butadiene-acrylonitrile copolymer, polyamide, copolymerized polyamide, polycarbonate, polyacetal, polymethyl methacrylate, polysulfone, polyphenylene oxide, polyester, copolymerized polyester, polyphenylene sulfide, polyetheresteramide, polyethersulfone, polyetherimide, polyamidoimide, polyimide, polyurethane, polyetherester, polyetheramide and polyesteramide. These may be used as a mixture of two or more thereof.

The non-woven fabric may also be a non-woven synthetic paper obtained from a web comprising irregularly disposed, crystalline and oriented synthetic organic polymer filaments with at least 75 wt% thereof having a textile denier, by exposing the web to a heated fluid incapable of dissolving the filaments to cause self-joining of filaments at a large number of intersections disposed at spatial intervals.

Such a non-woven synthetic paper can be produced by causing the self-joining while keeping the entire web at a uniform temperature and suppressing the shrinkage of filament within 20% and the reduction in the birefringence of filament within 50%, and then cooling the web to a temperature low enough to prevent the shrinkage of filament.

The film layer (A) constituting the screen of the present invention may be laminated with the thermoplastic resin-containing film layer (B), a woven fabric or a non-woven fabric by a general dry lamination, wet lamination, extrusion (sand) lamination, heat lamination or EB-curable lamination method using various adhesives, or by a method of providing an adhesive to form an adhesion layer similarly to the adhesive layer described later, and effecting pressure-sensitive adhesion through the adhesion layer.

In the screen of the present invention, an adhesive layer may be further provided, if desired, on at least one surface of the polyolefin-based resin-containing film layer (A) constituting the screen or on the thermoplastic resin-containing film layer (B), woven fabric layer or non-woven fabric layer stacked.

Representative adhesives are a rubber-based adhesive, an acryl-based adhesive and a silicone-based adhesive. Examples of the rubber-based adhesive include a polyisobutylene rubber, a butyl rubber, a mixture thereof, and those obtained by blending a tackifier such as rosin abietate, terpene·phenol copolymer and terpene·indene copolymer to the above-described rubber-based adhesive. Examples of the acryl-based adhesive include a 2-ethylhexyl acrylate·n-butyl acrylate copolymer and a 2-ethylhexyl acrylate·ethyl acrylate·methyl methacrylate copolymer each having a glass transition temperature of -20° C or less. As for the mode of the adhesive, a solvent type, an emulsion type, a hot-melt type and the like can be used. In general, a solvent type or an emulsion-type is coated by a known coating method, whereby the adhesive layer can be stacked.

In the case of providing an adhesive layer, the screen of the present invention can be used by sticking it to an adherend such as wall surface, show window and pane glass, but when the adhesive layer is replaced by a removable layer allowing for repeated sticking and release, the screen after use can be easily removed from the adherend without residual glue and can be repeatedly used. Furthermore, the positioning at sticking before use or the resticking when failed is also facilitated, and the commercial advantage is more enhanced.

The removable layer enables repeated sticking and release for an adherend, and examples thereof include an adsorption layer which can be formed by foaming a rubber, a vinyl chloride, an acryl-based resin, a urethane-based resin, a silicone-based resin, an elastomer or the like. The adsorption layer means a layer having an adsorbing activity by virtue of pores (recesses) formed by foaming in the surface and in the inside.

Examples of the removable layer include, other than the adsorption layer, a weakly adhesive layer where a fine protrusion or adhesion-inhibiting structure having a continuous pattern such as dotted, linear, latticed or network pattern is formed on the surface of the adhesive by blending a particle component working out to surface protrusions (spacer) to the above-described adhesive or by embossing, screen printing, gravure printing or the like. The weakly adhesive layer is a layer of an adhesive adjusted to a low adhesive force by the protrusion (convex) or adhesion-inhibiting structure formed on the surface.

Other than the adsorption layer and weakly adhesive layer, examples of the removable layer include an electrostatic adsorption layer formed of an easily chargeable and less attenuatable composition or structure mainly comprising a dielectric material.

These removable layers are adjusted not to depart from the purport of the present invention.

The adhesive layer or removable layer may be formed before or after laminating the film layer (A) with the thermoplastic resin-containing film layer (B), woven fabric or non-woven fabric.

On the surface of the adhesive layer or removable layer, a peelable material capable of peeling is preferably stacked. The material capable of peeling is provided to protect the adhesive layer or removable layer when not in use, and this material capable of peeling is peeled off on use.

The surface of the material capable of peeling, which comes into contact with the adhesive layer or removable layer, is generally subjected to a silicone treatment so as to have good releasability from the adhesive layer or removable layer. Usually, a commonly employed material capable of peeling, such as wood-free paper or craft paper, as-is or after calendering, resin-coating or film laminating, glassine paper, coated paper and plastic film, each subjected to a silicone treatment, can be used.

In the screen of the present invention, a masking layer can be provided on the non-image projecting surface side of the polyolefin-based resin-containing film layer (A). The masking layer is used for the purpose of shielding light and can be provided by black solid printing, white pigment printing, metal paint printing, vapor deposition of metal, sputtering of metal, foil pressing, hot stamping, coloration of thermoplastic resin-containing film layer (B), coloration of woven fabric, coloration of non-woven fabric, coloration of adhesive, coloration of adhesive layer, coating or the like.

In this way, the above-described film layer, the woven fabric, the non-woven fabric, the coat layer, the adhesive layer prepared from the colored adhesive, or the adhesive layer may serve also as the masking layer.

The masking layer contributes to further reduction of the low total light beam transmittance which is an essential requirement in the present invention, and for example, even when the polyolefin-based resin-containing film layer (A) has a relatively small thickness, the image projection light or natural light can be effectively prevented from yielding see-through light in the thickness direction.

In the screen of the present invention, through-holes penetrating in the thickness direction and having an open hole diameter of 0.1 to 8 mm, preferably from 0.2 to 8 mm, may be provided and continuously distributed in the plane direction at such intervals that the minimum distance between a hole and a hole is from 0.1 to 5 mm, preferably from 0.2 to 5 mm.

By providing distributed through-holes in the screen of the present invention, the condition on the back side of the opaque screen can be confirmed or the scenery in the back of the screen can be viewed.

The open hole diameter as used in the present invention is defined as follows according to the shape of open hole:
diameter in the case of a true circle shape;
short or long diameter in the case of an elliptic shape;
shortest or longest perpendicular in the case of a triangular shape;
shortest or longest diagonal in the case of a quadrangular or greater polygonal shape except for a trapezoid;
height (perpendicular) in the case of a trapezoidal shape; and
equivalent-circle diameter or the longest diameter out of diameters arbitrarily connecting one point and another point on the hole circumference.

As long as the open hole shape on the projection plane of the screen does not depart from the above-described ranges, the open hole shape may be changed in the thickness direction.

If the open hole diameter is less than 0.1 mm or the minimum distance between a hole and a hole exceeds 5 mm, viewing the scenery in the back of the screen tends to be difficult and this contradicts the purport of the present invention of providing through-holes, whereas if the open hole diameter exceeds 8 mm or the minimum distance between a hole and a hole is less than 0.1 mm, viewing of the projected image tends to be difficult.

The holes penetrating in the thickness direction of the screen of the present invention can be formed by using at least one method selected from a chemical treatment method (dissolution by etching or the like), a mechanical perforation method utilizing a roller with diamond particle, a cutting die or the like, a perforation method using a hot needle, a laser light perforation method, an electron beam irradiation perforation method, a plasma perforation method and a high-pressure discharge perforation method.

Whether the through-holes are formed on the entire surface of the screen or on a fixed area portion can be selected depending on the degree of area with which the scenery in the back of the screen is intended to be viewed. The array of through-holes provided on the plane is not particularly limited as long as the above-described ranges are satisfied.

In the case where a coat layer, a thermoplastic resin-containing film layer (B), a woven or non-woven fabric and an adhesive layer or removable layer are stacked, the through-holes are preferably formed all at once in the screen of the present invention after stacking these layers. If these layers are stacked after forming through-holes, the purport of the present invention of providing through-holes cannot be satisfied unless the stacked coat layer, thermoplastic resin-containing film layer (B), woven or non-woven fabric and adhesive layer or removable layer themselves are transparent.

Also, in the case of stacking a masking layer, the purport of the present invention of providing through-holes cannot be satisfied unless the through-holes are formed in the screen after stacking the masking layer.

The material capable of peeling may be stacked before or after the formation of through-holes in the screen of the present invention. However, in view of the purpose of providing the material capable of peeling, that is, protection of the adhesive layer or removable layer when not in use as well as the easiness of perforation processing as an actual operation, the through-holes are preferably formed all at once after stacking the material capable of peeling.

The total light beam transmittance, total light beam reflectance, glossiness, density, opacity, thickness and porosity of the polyolefin-based resin-containing film layer (A) for use in the present invention are all measured for the film before perforation is applied.

By imparting curl (curling habit) property, the screen of the present invention can be suitably used as a roll screen. In the screen of the present invention, the curl value is 250 mm or less, preferably from 10 to 200 mm, more preferably from 10 to 150 mm.

When a screen having a large curl direction in the longitudinal direction is cut into an A4 size (210x297 mm) and placed flat by directing upward the curl face to form a concave shape, the curl value as used in the present invention is an apparent length (projected length) of a side in the longitudinal direction viewed from the plane direction of the screen.

In the above-described measuring method, the curl value is 297 mm when the screen is not curled at all, about 189 mm when the screen is semi-circularly curled as viewed from the side face, and 95 mm or less when the screen is curled into a cylindrical shape. As the curl value is smaller, the curled state is stronger.

When the screen of the present invention is processed as a roll screen, the screen can be housed by rolling it up into a compact rolling diameter by virtue of this curl property while requiring no unreasonable force and preventing the generation of folds.

If the curl value exceeds 250 mm, an unreasonable force is imposed on the screen at the time of rolling, and folds and the like are generated thereon.

The direction of the curl imparted to the screen of the present invention is not particularly limited, but from the standpoint of protecting the image projection plane when not in use, the curl direction is preferably imparted such that the film layer (A) working out to the image projection plane faces inward on rolling the screen.

The curl can be easily imparted to the screen of the present invention.

For example, the curl can be easily imparted by a method of exposing the screen in a free state or in a state of being wound around a round bar or the like to a specific temperature environment (heated chamber, hot water, high-temperature steam) for a predetermined time. The curl can also be imparted by passing the screen through a furnace in a specific temperature environment and then taking it up.

Furthermore, the curl can also be imparted by passing the screen in contact with or in proximity to, for example, a hot roll, a heated head or a head of generating a specific electromagnetic wave and undergoing thermal conversion on the screen, each set to a specific temperature, and then taking it up.

In addition, the curl can also be imparted by stacking the film layer (A) and film layer (B) constituting the screen of the present invention while adjusting the stacking step to cause a difference in the tension between respective layers, and then taking up the stacked body.

The specific temperature is preferably higher than the heat shrinkage starting temperature of the film layer (A) and/or film layer (B) constituting the screen of the present invention, for example, from 60 to 300°C, more preferably from 80 to 280°C, still more preferably from 100 to 260°C.

The processing time can be variously set within the range of approximately from 1 msec to 7 days depending on the method used, but is preferably from 3 msec to 5 days, more preferably from 5 msec to 3 days.

The screen of the present invention may be formed of the film layer (A) alone, but in order to easily shape and keep the curl, it is more effective to take a stacked structure of the film layer (A) and a film layer (B) differing in the behaviors such as heat shrinkage.

In the screen of the present invention, printing may be applied on the film layer (A) or coat layer, or on the film layer (B) or woven or non-woven fabric. Examples of the method for applying the printing include printing by off-set printing, gravure printing, flexographic printing, screen printing, letter press printing, laser printer, thermal transfer printer or inkjet printer.

When such a film is used, a screen having previously printed therein background information or image can be obtained.

### <EXAMPLES>

The present invention is described in greater detail below by referring to Examples, Comparative Example and Test Example. As for the materials, amounts used, ratios, processing contents, processing procedures, practical modes and the like described in the following Examples, appropriate changes and modifications can be made therein without departing from the purport of the present invention. Accordingly, the scope of the present invention should not be construed as being limited to these specific Examples. The raw materials used in Production Examples are shown in Table 1.

**Table 1**

| (Kind of Raw Material) | |
|---|---|
| Kind | Contents |
| PP1 | propylene homopolymer (Novatec PP EA8, trade name, produced by Japan Polychem Corp.), MFR (230°C, 2.16 kg load) = 0.8 g/10 min |
| PP2 | propylene homopolymer (Novatec PP MA4, trade name, produced by Japan Polychem Corp.), MFR (230°C, 2.16 kg load) = 5 g/10 min |
| HDPE | high-density polyethylene (Novatec HD HJ360, produced by Japan Polychem Corp.), MFR (230°C, 2.16 kg load) = 5.5 g/10 min |
| Calcium carbonat e | heavy calcium carbonate (Softon 1800, produced by Bihoku Funka Kogyo Co., Ltd.), average particle diameter: 1.8 µm |

### [Production of Polyolefin-Based Resin-Containing Film Layer (A)]

### (Production Example 1)

Propylene homopolymer (PP2) (74 wt%), 10 wt% of high-density polyethylene (HDPE) and 16 wt% of calcium carbonate were melt-kneaded by an extruder at 250°C, and the melt-kneaded product was fed to a die set at 250°C, extruded into a film shape and then cooled by a cooling roll to obtain an unstretched film. This unstretched film was heated at 135° C and longitudinally stretched at a draw ratio of 4 times to obtain a uniaxially stretched film. This film was used as a substrate layer (b).

A mixture containing 52 wt% of propylene homopolymer (PP1), 3 wt% of HDPE and 45 wt% of calcium carbonate was melt-kneaded by separate extruders at 250 ° C, and the melt-kneaded products were fed to a die set at 250°C, extruded into a film shape, stacked as a surface layer (a) and a back surface layer (c) on both sides of the four-fold stretched film prepared above and then cooled to 60°C to obtain a laminate film (a/b/c) having a three-layer structure.

Subsequently, this laminate film was re-heated up to 150° C, transversely stretched at a draw ratio of 9 times by a tenter, annealed at 160°C, cooled to 60°C and then trimmed to obtain a multilayer stretched resin film layer (A) having a thickness of 250 µm (a/b/c = 50 µm/150 µm/50 µm) and a density of 0.80 g/cm³.

### (Production Example 2)

A multilayer stretched resin film layer (A) having a thickness of 80 µm (a/b/c = 17 µm/46 µm/17 µm) and a density of 0.77 g/cm³ was obtained in the same manner as in Production Example 1 except for changing the amounts of the resins extruded.

### (Production Example 3)

A multilayer stretched resin film layer (A) having a thickness of 96 µm (a/b/c = 16 µm/64 µm/16 µm) and a density of 0.77 g/cm³ was obtained in the same manner as in Production Example 1 except for changing the amounts of the resins extruded.

### (Production Example 4)

A multilayer stretched resin film layer (A) having a thickness of 96 µm (a/b/c = 19 µm/58 µm/19 µm) and a density of 0.79 g/cm³ was obtained in the same manner as in Production Example 1 except for formulating the surface layer (a) from PP2=100% and changing the amounts of the resins extruded.

The multilayer stretched resin film layers (A) obtained in Production Examples 1 to 4 each was measured for the total light beam transmittance, total light beam reflectance, glossiness, opacity and porosity by the methods described above. The results are shown together in Table 2.

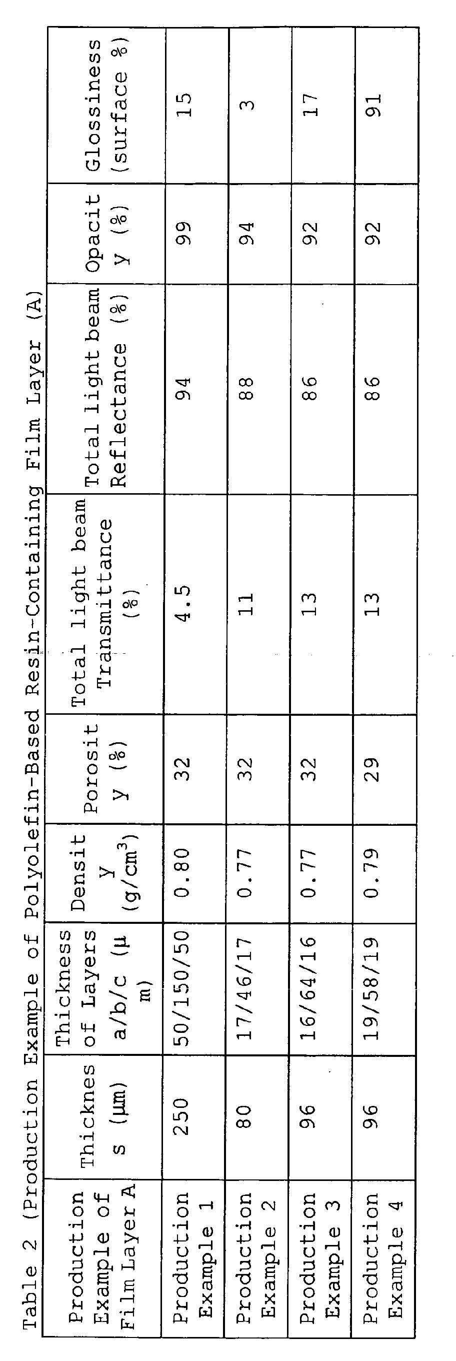

### [Example/Comparative Example]

### (Example 1)

The film layer (A) obtained in Production Example 1 was used as-is as the screen.

### (Example 2)

An inkjet coating agent having the following composition was coated on the surface layer (a) side of the film layer (A) obtained in Production Example 2 to have a dry coating thickness of 40 µm and then dried to obtain a screen where a coat layer was provided.

| | | |
|---|---|---|
| Fine particulate silica (average particle diameter: 0.3 µm) (solid content: 18%) | 76 wt% | |
| Polyvinyl alcohol (solid content: 10%) | 20 wt% | |
| Melamine formalin resin (solid content: 30%) | 2 | wt% |
| Cationic acryl polymer (solid content: 30%) | 2 wt% | |

Furthermore, a "logo mark" was printed on the coat layer side at the lower end part of the screen by using a large-sheet IJ printer (MC-9000, trade name, manufactured by Seiko Epson Corp.)

### (Example 3)

Polyurethane-based adhesives (BPS-2080A, BPS-2080B, trade names, produced by Toyo-Morton Co., Ltd.) were coated on the back surface layer (c) side of the film layer (A) obtained in Production Example 3 to give a coated amount of 3 g/m² after drying and dried, and a non-woven fabric (Spun Bond #Unisel, trade name, produced by Teijin Ltd.) having a basis weight of 15.5 g/m² was stacked and laminated thereon by dry lamination to obtain a screen.

### (Example 4)

A screen was obtained in the same manner as in Example 3 except for kneading 30 wt% of titanium oxide whisker into the above-described polyurethane-based adhesives so as to impart a masking property.

### (Example 5)

Release paper, as a material capable of peeling, was prepared by laminating a polyethylene film on both surfaces of wood-free paper and applying a silicone treatment to one surface, coating an acryl-based adhesive (Olibain BPS-1109, trade name, produced by Toyo Ink Kagaku Kogyo K.K.) on the silicone-treated surface to give a solid content amount of 25 g/m², and drying to form an adhesive layer. This adhesive layer on the release paper was stacked on the back surface layer (c) of the film layer obtained in Production Example 1 to obtain a screen having an adhesive layer and a material capable of peeling.

### (Example 6)

Polyurethane-based adhesives (BPS-2080A, BPS-2080B, trade names, produced by Toyo-Morton Co., Ltd.) were coated on the back surface layer (c) side of the film layer (A) obtained in Production Example 3 to give a coated amount of 3 g/m² after drying and dried, and a transparent polyester film (Diafoil T600, trade name, produced by Mitsubishi Polyester Film Corp., thickness: 100 µm, total light beam transmittance: 90%) was stacked and laminated thereon by dry lamination to obtain a composite film.

This composite film was passed through 30 mm-diameter heated rolls set to a surface temperature of 210°C at a rate of 6 m/min and taken up, thereby imparting curl, to obtain a screen.

The curl value of the obtained screen was 40 mm.

### (Example 7)

True-circular through-holes having a diameter of 1.0 mm were networkly provided over the entire surface of the film layer (A) obtained in Production Example 1 at such intervals that the minimum distance between a hole and a hole was 1 mm (at a pitch of 2 mm based on the through-hole center), by using a precision cutting die to obtain a screen.

### (Example 8)

True-circular through-holes having a diameter of 0.5 mm were networkly provided over the entire surface of the screen having an adhesive layer and a material capable of peeling obtained in Example 5 at such intervals that the minimum distance between a hole and a hole was 1 mm (at a pitch of 1.5 mm based on the through-hole center), by using a laser light perforation method to obtain a screen.

### (Comparative Example 1)

The film layer (A) obtained in Production Example 4 was used as-is as a screen.

The constitutions in Examples and Comparative Example are shown together in Table 3.

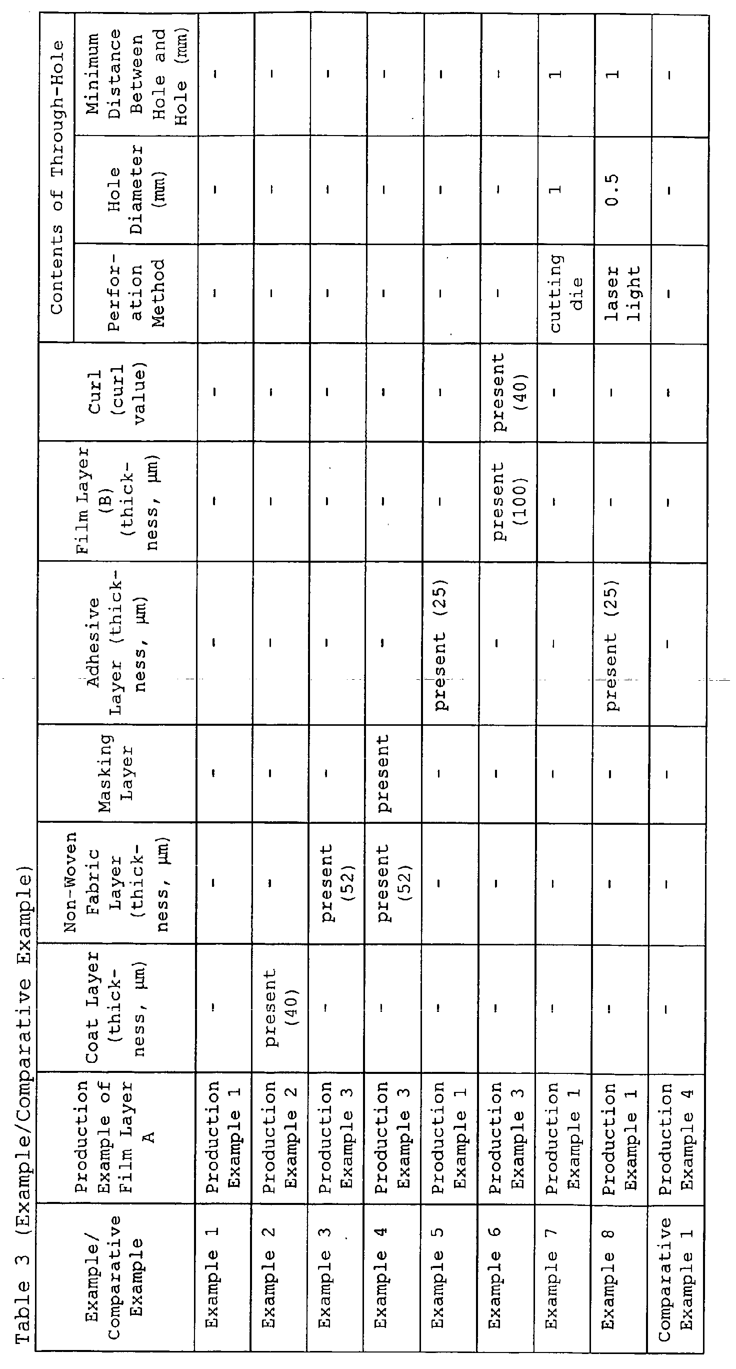

### [Test Example]

The screens obtained in Examples 1 to 4 and 7 and Comparative Example 1 each was used as a tapestry in a size of 1.8 m × 1.8 m. The screens having an adhesive layer obtained in Examples 5 and 8 each was attached to a glass pane and used as a show window in a size of 1.5 m × 2.0 m. The curl-imparted screen obtained in Example 6 was used as a roll-up roll screen in a size of 0.6 m × 0.9 m.

An image was projected on the film layer (A) face side serving as a screen surface by using a liquid crystal projector, and the clearness of image and the presence or absence of halation were evaluated according to the following criteria.
Clearness of image:
   ○: Clear
   ×: Unclear (unfocused, blurred or difficultly viewable imaging)
Halation:
   ○: None
   ×: Occurred (difficultly viewable due to specular reflection)
      Furthermore, the easy handleability as a screen was compared according to the following criteria:
Handling:
   ○: Easy to carry and apply
   ×: Difficult to carry and apply (1 kg or more in terms of weight)

The results are shown together in Table 4.

As for the screen imparted with curl to obtain a roll screen in Example 6, the easy rollability at the rolling operation was evaluated according to the following criteria:
○: Smoothly rolled without resistance
×: Not successively rolled due to resistance at the rolling

As for the screens produced in Examples 7 and 8, the visibility of the scenery in the back of the screen was evaluated according to the following criteria:
○: Visible (the profile or movement of a material present in the back scene could be made out)
×: Invisible (the profile or movement of a material present in the back scene could not be made out)

The results are shown in Table 5.

**Table 4**

| (Test Example) | | | | | | |
|---|---|---|---|---|---|---|
| Example/ Comparative example | Mode | Dimension (m) | Weight of Screen (kg) | Clearness of Image | Halation | Handling |
| Example 1 | Tapestry | 1.8×1.8 | 0.65 | ○ | ○ | ○ |
| Example 2 | Tapestry | 1.8×1.8 | 0.33 | ○ | ○ | ○ |
| Example 3 | Tapestry | 1.8×1.8 | 0.30 | ○ | ○ | ○ |
| Example 4 | Tapestry | 1.8×1.8 | 0.30 | ○ | ○ | ○ |
| Example 5 | show window | 1.5×2.0 | 0.68 | ○ | ○ | ○ |
| Example 6 | roll screen | 0.6×0.9 | 0.12 | ○ | ○ | ○ |
| Example 7 | Tapestry | 1.8×1.8 | 0.65 | ○ | ○ | ○ |
| Example 8 | show window | 1.5×2.0 | 0.68 | ○ | ○ | ○ |
| Comparative Example 1 | Tapestry | 1.8×1.8 | 0.25 | × | × | ○ |

**Table 5**

| (Test Example) | | | | |
|---|---|---|---|---|
| Example | Presence or Absence of Curl (curl value) | Presence or Absence of Perforation | Performance of Screen | |
| | | | Easy Rollability | Visibility of Back Scene |
| Example 6 | Present | none | ○ | - |
| Example 7 | None | present | - | ○ |
| Example 8 | None | present | - | ○ |

While the invention has been described in detail and with reference to specific embodiments thereof, it will be apparent to one skilled in the art that various changes and modifications can be made therein without departing from the spirit and scope thereof.

This application is based on the Japanese patent application (Patent Application No. 2002-298155) filed October 11, 2002, the contents of which are incorporated herein by reference in its entirety.

### <INDUSTRIAL APPLICABILITY>

The screen of the present invention ensures a clear image, causes no halation and is lightweight and is easily handleable. Therefore, the screen of the present invention can exert excellent functions as a screen for image projection, and its industrial utility value is very large.

## Claims

1. A screen comprising a polyolefin-based resin-containing film layer (A) having a total light beam transmittance of less than 30%, a total light beam reflectance of more than 70% to 100%, a glossiness of 60% or less and a density of 0.5 to 1.2 g/cm³.

2. The screen as claimed in claim 1, wherein the opacity of said film layer (A) is from more than 75% to 100%.

3. The screen as claimed in claim 1 or 2, wherein the thickness of said film layer (A) is from 20 to 500 µm.

4. The screen as claimed in any one of claims 1 to 3, wherein the porosity of said film layer (A) is from 20 to 75%.

5. The screen as claimed in any one of claims 1 to 4, wherein said film layer (A) has a multilayer structure.

6. The screen as claimed in any one of claims 1 to 5, wherein said film layer (A) has a multilayer structure containing an at least uniaxially stretched layer.

7. The screen as claimed in any one of claims 1 to 6, wherein a coat layer is provided on at least one surface of said film layer (A).

8. The screen as claimed in any one of claims 1 to 7, wherein a film layer (B) containing a thermoplastic resin is provided on one surface of said film layer (A).

9. The screen as claimed in claim 8, wherein the thermoplastic resin constituting said film layer (B) contains a polyolefin-based resin or a polyester-based resin.

10. The screen as claimed in any one of claims 1 to 9, wherein either a woven fabric or a non-woven fabric is provided on at least one surface of said film layer (A) or on said film layer (B).

11. The screen as claimed in any one of claims 1 to 10, wherein an adhesive layer is further provided on at least one surface of said film layer (A), on said film layer (B) or on the woven or non-woven fabric.

12. The screen as claimed in any one of claims 1 to 10, wherein a removable layer allowing for repeated sticking and peeling is further provided on at least one surface of said film layer (A), on said film layer (B) or on the woven or non-woven fabric.

13. The screen as claimed in claim 12, wherein said removable layer is any one of an adsorption layer, a weakly adhesive layer and an electrostatic adsorption layer.

14. The screen as claimed in any one of claims 11 to 13, wherein a material capable of peeling is provided on the surface of said adhesive layer or removable layer.

15. The screen as claimed in any one of claims 1 to 14, wherein a masking layer is provided on the image non-projection plane side of said film layer (A).

16. The screen as claimed in any one of claims 1 to 15, wherein through-holes penetrating in the thickness direction of the screen and having an open hole diameter of 0.1 to 8 mm are provided and continuously distributed in the plane direction at such intervals that the minimum distance between a hole and a hole is from 0.1 to 5 mm.

17. The screen as claimed in any one of claims 1 to 10, 15 and 16, wherein the curl value defined below is 250 mm or less:
Curl Value:
when a screen is cut into an A4 size (210x297 mm) with the large curl direction being the longitudinal direction, and is placed flat by directing upward the curl face to form a concave shape, the curl value is an apparent length (projected length) of a side in said longitudinal direction viewed from the plane direction of the screen.

18. The screen as claimed in any one of claims 1 to 17, wherein printing is applied to any one of said film layer (A), coat layer, thermoplastic resin-containing film layer (B) and woven or non-woven fabric.

19. The screen as claimed in any one of claims 1 to 18, wherein the polyolefin-based resin contained in said film layer (A) is a polypropylene-based resin.

20. The screen as claimed in any one of claims 1 to 19, wherein said film layer (A) contains at least one of an inorganic fine powder and an organic filler.
